# EUROPEAN PATENT SPECIFICATION

(11) **EP 3 741 918 B1**
(45) Date of publication and mention of the grant of the patent: **07.06.2023**
(21) Application number: 20164321.0
(22) Date of filing: 19.03.2020
(51) Int. Cl.: E03B 9/02, E03B 9/06, F16K 27/00, G01L 19/08, G01M 3/32, A62C 35/20, A62C 37/50

(54) **OUTER HOUSING FOR A PRESSURE MONITORING SYSTEM**
AUSSENGEHÄUSE FÜR EIN DRUCKÜBERWACHUNGSSYSTEM
LOGEMENT EXTÉRIEUR POUR UN SYSTÈME DE SURVEILLANCE DE PRESSION

(30) Priority: 30.04.2019 US 201916399109
(43) Date of publication of application: 25.11.2020
(60) Divisional application: 23161986.7
(73) Proprietor: Mueller International, LLC, Atlanta, GA 30328 (US)
(72) Inventor: MORENO, Carlos Stephen, Chattanooga, TN 37412 (US); MITCHELL, Timothy J., Hixson, TN 37343 (US)
(74) Representative: Style, Kelda Camilla Karen

(56) References cited:
- WO-A1-2012/000088
- WO-A1-2013/025526
- WO-A1-2013/038404
- DE-C- 67 740
- FR-A1- 2 792 070
- US-A- 3 692 042
- US-A- 4 770 203
- US-A1- 2017 082 592

## Description

### CROSS-REFERENCE TO RELATED APPLICATIONS

The present application is a continuation-in-part of U.S. Application No. 16/252,099, filed January 18, 2019.

### TECHNICAL FIELD

This disclosure relates to the field of fire hydrants. More specifically, this disclosure relates to a housing for a hydrant pressure monitoring system.

### BACKGROUND

Fire hydrants are connected to fluid pipeline systems, such as municipal water systems, and allow firefighters to access the water supply in the pipeline system. Wet barrel fire hydrants can define a hydrant cavity that can be filled with water, or another fluid, even when the hydrant is not in operation. Typically, wet barrel hydrants can be found in regions where cold weather conditions are less common.

It can be desirable to monitor the water pressure in a water pipeline system. However, pressure monitors mounted to the pipeline below ground can be difficult to access for maintenance or replacement. Furthermore, it can be desirable to monitor for leaks in a water pipeline system. However, like pressure monitors, it can be difficult to access leak detection systems that are below ground. Typical leak detection systems do not constantly monitor for leaks, but rather monitor for leaks on a fixed schedule - for example, once per day. As such, leaks can go undetected and can even worsen during the time between scheduled leak detection cycles.

Pressure monitoring systems often comprise a housing for protecting sensitive elements within an interior of the pressure monitoring system. In housings comprising multiple separate housing components, gaps can be formed therebetween. Water and/or other undesirable elements can enter the interior of the pressure monitoring system through the gaps. In some aspects, spaces between separate housing components can also allow for accidental or objectionable disassembly of the housing by providing access points for tools that can aid in disassembly. Fasteners for connecting the separate housing components can also be damaged when a force is applied at or near the joints thereof.

### SUMMARY

It is to be understood that this summary is not an extensive overview of the disclosure. This summary is exemplary and not restrictive, and it is intended neither to identify key or critical elements of the disclosure nor delineate the scope thereof. The sole purpose of this summary is to explain and exemplify certain concepts of the disclosure as an introduction to the following complete and extensive detailed description.

Disclosed is an outer housing for a pressure monitoring system comprising a sidewall shell defining an axis extending centrally therethrough and comprising an annular inner sidewall projection extending from a top end thereof; and a cap mounted to the sidewall shell, the cap defining an annular cap recess, wherein the annular inner sidewall projection is configured to engage the annular cap recess; and an annular outer sidewall projection, the annular outer sidewall projection positioned radially outward from the annular inner sidewall projection, wherein the annular inner sidewall projection defines a height that is greater than a height of the annular outer sidewall projection.

US4770203A discloses an operating assembly for a valve stem of a valve of a hydrant. It discloses a hydrant which includes the features of a tamper-resistant nozzle assembly, a non-hydra locking operating assembly, a tamper-resistant standpipe coupling assembly, and a specific design of valve member retaining and sealing assembly with a floating seal standpipe coupling assembly

DE67740C discloses a water hydrant with a valve that can be lifted out without having to remove the shaft pipe.

WO2013/038404A1 discloses a protective-fire-hydrant-cover comprising an operating-nut-extender and a protective-fire-hydrant-casing. The operating-nut-extender is firmly coupled with an operating-nut of a fire-hydrant such that when the operating-nut-extender rotates, the operating-nut rotates therewith, the operating-nut-extender includes an inner-groove exhibiting a substantially circular shape.

WO2013/025526A1 discloses a system includes a housing; at least one leak detection sensor within the housing; and a transmitter circuit in communication with the at least one leak detection sensor for communicating leak detection data.

WO2012/000088A1 discloses a non-interrupting on-line water distribution pressure monitoring system for a dry barrel fire hydrant includes an upper portion or the head and a lower portion or the barrel having an opening. A water flow control mechanism mounted at the opening of the lower portion of the barrel for controlling the water flowing through the barrel. An operating rod for activating the water flow control mechanism having an upper operating rod and a lower operating rod extends through the barrel between the upper and lower portions.

US3692042A discloses a fire hydrant having an improved means for securing a cover plate to the upper standpipe section of the hydrant. The cover plate rests on the upper surface of the upper standpipe section and has an annular flange which projects into the upper standpipe section and against the inner surface thereof to form an annular cavity and to limit relative lateral movement.

US2017/082592A1 discloses a liquid monitoring system which includes a remote measurement device located at a location of the fire hydrant that is in contact with water provided by a water main. The remote measurement device has sensors that measure characteristics of the water and a communication interface that transmits measured information to a communication network device that may be located elsewhere on the fire hydrant. The communication network device communicates with a communication network.

FR2792070A1 discloses an apparatus intended for the measurement and the recording of the variations of pressure of a water distribution network characterized in that it comprises a casing in the form of plug coming to be positioned on a connection of arrival of mains water, this box containing a pressure probe, an electronic recording device and an autonomous power supply.

### BRIEF DESCRIPTION OF THE DRAWINGS

The features and components of the following figures are illustrated to emphasize the general principles of the present disclosure. Corresponding features and components throughout the figures may be designated by matching reference characters for the sake of consistency and clarity.
FIG. 1 is a perspective view of a pressure monitoring and leak detection system mounted to a hydrant and comprising a pressure monitoring subsystem and a leak detection subsystem.
FIG. 2 is a cross-sectional view of a pressure sensor assembly of the pressure monitoring subsystem of FIG. 1 taken along line 2-2 in FIG. 1.
FIG. 3 is a top perspective view of pressure sensor assembly of FIG. 2.
FIG. 4 is a cross-sectional view of the pressure sensor assembly of FIG. 2 mounted to the hydrant of FIG. 1 taken along line 2-2 in FIG. 1.
FIG. 5 is a cross-sectional view of the pressure sensor assembly mounted to the hydrant, taken along line 2-2 in FIG. 1
FIG. 6 is a cross-sectional view of the pressure sensor assembly of FIG. 2 mounted to a base assembly of the pressure monitoring subsystem of FIG. 1 taken along line 2-2 in FIG. 1.
FIG. 7 is cross-sectional view of the base assembly of FIG. 6 mounted to a power assembly of the pressure monitoring subsystem of FIG. 1 taken along line 2-2 in FIG. 1.
FIG. 8 is a top perspective view of an antenna assembly of the pressure monitoring subsystem of FIG. 1.
FIG. 9 is a cross-sectional view of the pressure monitoring and leak detection system of FIG. 1, taken along line 2-2 of FIG. 1.
FIG. 10 is a cross-sectional view of the pressure monitoring and leak detection system of FIG. 1 mounted to the hydrant of FIG. 1, taken along line 2-2 in FIG. 1.
FIG. 11 is a flow diagram illustrating an example process for monitoring water pressure and detecting leaks in a pipeline system, in accordance with one aspect of the present disclosure.
FIG. 12 is a flow diagram illustrating another example process for monitoring water pressure and detecting leaks in a pipeline system, in accordance with another aspect of the present disclosure.
FIG. 13A illustrates a perspective view of the pressure monitoring subsystem, according to the present disclosure.
FIG. 13B illustrates a close-up, cross-sectional view of the pressure monitoring subsystem of FIG. 13A taken along line 13-13 in FIG. 13A.
FIG. 14 illustrates a close-up, cross-sectional view of the pressure monitoring subsystem taken along line 13-13 in FIG. 13A, not forming part of the invention.
FIG. 15 illustrates a close-up, cross-sectional view of the pressure monitoring subsystem taken along line 13-13 in FIG. 13A, not forming part of the invention.
FIG. 16 illustrates a close-up, cross-sectional view of the pressure monitoring subsystem taken along line 13-13 in FIG. 13A, not forming part of the invention.

### DETAILED DESCRIPTION

The present disclosure can be understood more readily by reference to the following detailed description, examples, drawings, and claims, and the previous and following description.. It is to be understood that the terminology used herein is for the purpose of describing particular aspects only.

The following description is provided as an enabling teaching of the present devices, systems, and/or methods in its best, currently known aspect.

As used throughout, the singular forms "a," "an" and "the" include plural referents unless the context clearly dictates otherwise. Thus, for example, reference to "an element" can include two or more such elements unless the context indicates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

For purposes of the current disclosure, a material property or dimension measuring about X or substantially X on a particular measurement scale measures within a range between X plus an industry-standard upper tolerance for the specified measurement and X minus an industry-standard lower tolerance for the specified measurement. Because tolerances can vary between different materials, processes and between different models, the tolerance for a particular measurement of a particular component can fall within a range of tolerances.

As used herein, the terms "optional" or "optionally" mean that the subsequently described event or circumstance can or cannot occur, and that the description includes instances where said event or circumstance occurs and instances where it does not.

The word "or" as used herein means any one member of a particular list and also includes any combination of members of that list. Further, one should note that conditional language, such as, among others, "can," "could," "might," or "may," unless specifically stated otherwise, or otherwise understood within the context as used, is generally intended to convey that certain aspects include, while other aspects do not include, certain features, elements and/or steps. Thus, such conditional language is not generally intended to imply that features, elements and/or steps are in any way required for one or more particular aspects or that one or more particular aspects necessarily include logic for deciding, with or without user input or prompting, whether these features, elements and/or steps are included or are to be performed in any particular aspect.

Disclosed in the present application is a pressure monitoring system and associated methods, systems, devices, and various apparatus. Example aspects of the pressure monitoring system can comprise a connector for connecting the pressure monitoring system to a wet barrel hydrant and a pressure sensor for monitoring the pressure of water received in the wet barrel hydrant. It would be understood by one of skill in the art that the disclosed pressure monitoring system is described in but a few exemplary aspects among many.

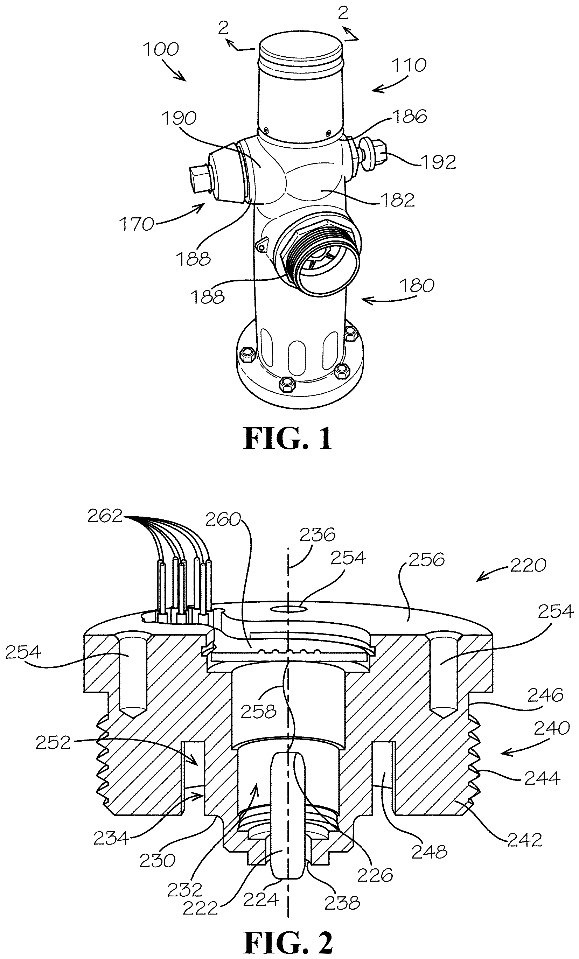

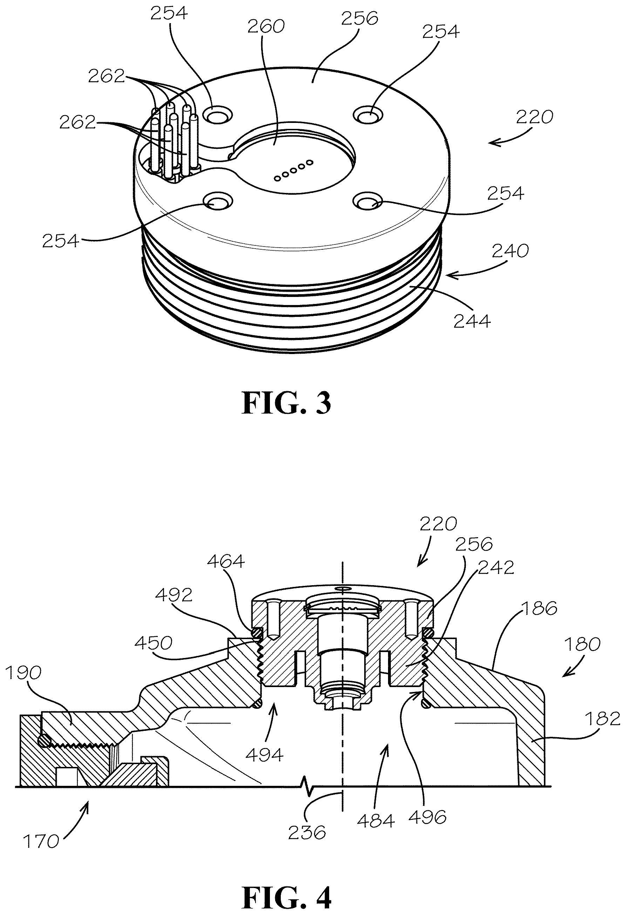

Figure 1 illustrates a first aspect of a pressure monitoring and leak detection system 100. According to example aspects, the pressure monitoring and leak detection system 100 can comprise a pressure monitoring subsystem 110 ("PMS") and a leak detection subsystem 170 ("LDS"). As shown, each of the pressure monitoring subsystem 110 and leak detection subsystem 170 can be mounted to a fire hydrant; for example, a wet barrel hydrant 180. The wet barrel hydrant 180 can define a barrel 182 and an interior hydrant cavity 484 (shown in Figure 4) defined by the barrel 182. Water, or another fluid, from a pipeline system (not shown) can be housed within the hydrant cavity 484. In example aspects, the pressure monitoring subsystem 110 can be coupled to the wet barrel hydrant 180 at a top end 186 of the barrel 182, and the leak detection subsystem 170 can be coupled to the wet barrel hydrant 180 at a side of the barrel 182. For example, the wet barrel hydrant 180 can comprise one or more nozzles 188 extending from the barrel 182, and the leak detection subsystem 170 can be coupled to a nozzle 188 extending from a left side 190 of the barrel 182, relative to the orientation shown. The barrel 182 can further comprise an operation nut 192, which can be rotated to open and close a valve (not shown) housed within or below the barrel 182, such as a valve within the nozzle 188. Opening and closing the valve can supply or cut off water flow, respectively, to the wet barrel hydrant 180.

Figure 2 illustrates an aspect of a pressure sensor assembly 220. As shown, the pressure sensor assembly 220 can comprise a pressure sensor 222 and a pressure sensor housing 230. The pressure sensor 222 can be, for example, a piezo-resistive strain gauge, a capacitive gauge, an electromagnetic gauge, a piezoelectric device, or any other suitable device known in the art for measuring pressure. Example aspects of the pressure sensor housing 230 can define an interior housing cavity 232 for receiving the pressure sensor 222. The housing cavity 232 can define a center axis 236, as shown. A portion of the pressure sensor 222 can extend through an opening 238 in the housing cavity 232 to measure the pressure of water outside of the housing cavity 232. In other aspects, the pressure sensor can be recessed into the housing cavity 232 and can measure the pressure of water received within the housing cavity 232. Example aspects of the pressure sensor housing 230 can further comprise a connector 240 for connecting the pressure sensor assembly 220 to the wet barrel hydrant 180 (shown in Figure 1). In other aspects, the connector 240 can be configured to connect the pressure sensor assembly 220 to another suitable device, such as, for example, a pipe, a valve, etc. The connector 240 can be a threaded flange 242, as shown, and a threading 244 can be formed on an outer surface 246 of the threaded flange 242; however, in other aspects, the connector 240 can be any other suitable fastener known in the art, including, but not limited to, a clip, rivet, weld, adhesive, and the like. Furthermore, in other aspects, the threading 244 can be formed on an inner surface 248 of the threaded flange 242. As shown in the present Figure 2, in some aspects, an annular groove 252 can be formed between the inner surface 248 of the threaded flange 242 and an outer surface 234 of the housing cavity 232. Furthermore, the pressure sensor housing 230 can define one or more mounting bores 254 extending into a locking disc 256 of the pressure sensor housing 230. The mounting bores 254 can be blind holes, as shown, or can be through-holes. According to example aspects, the locking disc 256 can be oriented above the connector 240, relative to the orientation shown.

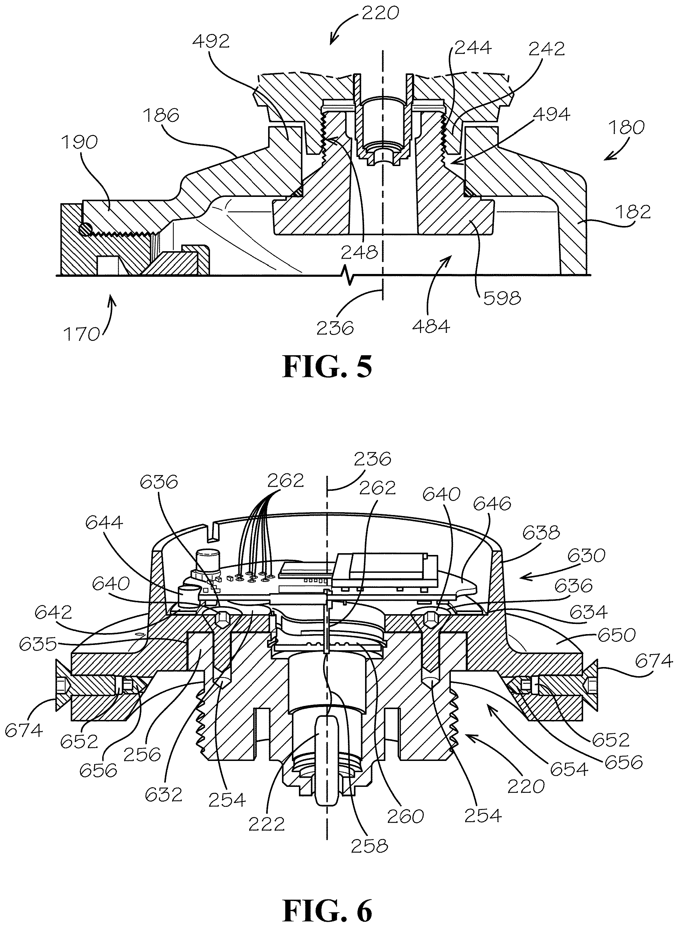

Example aspects of the pressure sensor 222 can be substantially centrally located within the housing cavity 232. The pressure sensor 222 can define a sensing end 224 extending through the opening 238 and a wire end 226 opposite the sensing end 224 and housed within the housing cavity 232. The sensing end 224 can be in contact with the water, or other fluid, in the hydrant cavity 484 (shown in Figure 4) and can be configured to measure the pressure of the water. A pressure sensor wire 258 can be connected to the wire end 226 of the pressure sensor 222 and can be configured to electronically communicate pressure data measured by the pressure sensor 222 to an auxiliary PCB 260 (printed circuit board), as shown. Furthermore, example aspects of the auxiliary PCB can comprise one or more pins 262 configured to electrically connect the pressure sensor wire 258 to a main PCB 646 (shown in Figure 6). The pins 262 can be positioned to connect to the main PCB 646 at a desired location. For example, as shown, the pins 262 can be offset from the center axis 236. Figure 3 illustrates a perspective view of the pressure sensor assembly 220. As shown, the pressure sensor assembly 220 can define a generally annular shape about the center axis 236. Also, in the present aspect, the auxiliary PCB 260 can define a generally hourglass shape. The shape of the auxiliary PCB can allow the pins 262 to be offset from the center axis 236 to a desired location on the auxiliary PCB 260, such that the pins 262 can be positioned to connect to the main PCB 646 where desired. In other aspects, the auxiliary PCB 260 can define any suitable shape can allow the pins 262 to be positioned as needed to connect to the main PCB 464 at a desired location.

Figure 4 illustrates the pressure sensor assembly 220 mounted to the top end 186 of the barrel 182 of the wet barrel hydrant 180. As shown, a hydrant flange 492 can extend from the top end 186 of the barrel 182. The hydrant flange 492 can define a hydrant bore 494 therethrough, and the hydrant bore 494 can be in fluid communication with the hydrant cavity 484. The threaded flange 242 of the pressure sensor assembly 220 can be received within the hydrant bore 494 and can be configured to threadably mate with a threaded bore wall 496 to couple the pressure sensor assembly 220 to the top end 186 of the wet barrel hydrant 180. In some aspects, an O-ring 464 can be positioned adjacent a proximal end 450 of the threaded flange 242 to provide a seal and a buffer between the hydrant flange 492 and the locking disc 256. In another aspect, as illustrated in Figure 5, the wet barrel hydrant 180 can define a threaded mounting nut 598 mounted within the hydrant bore 494 at the top end 186 of the barrel 182. In the present aspect, the threading 244 can be defined on the inner surface 248 of the threaded flange 242, and the threaded flange 242 can be configured to mate with the threaded mounting nut 598. As shown, in example aspects, the threaded flange 242 can be received within the hydrant bore 494 between the threaded mounting nut 598 and the hydrant flange 492. The threaded flange 242 can be configured to threadably mate with the threaded mounting nut 598 to secure the pressure sensor assembly 220 to the top end 186 of the wet barrel hydrant 180.

Figure 6 illustrates the pressure sensor assembly 220 mounted to a base assembly 630 of the pressure monitoring subsystem 110 (shown in Figure 1), according to an example aspect. As shown, the base assembly 630 can comprise a central support 632 and a cylindrical wall 638 extending axially from a peripheral edge 634 of the central support 632. The base assembly 630 can further define a base recess 635 that can be configured to receive the locking disc 256 of the pressure sensor assembly 220. As shown, one or more fasteners 640 can extend through mounting bores 636 of the central support 632 and can engage the mounting bores 254 of the pressure sensor assembly 220 to couple the base assembly 630 to the pressure sensor assembly 220. In some aspects, coupling the pressure sensor assembly 220 to the base assembly 630 can comprise integrally or monolithically forming the base assembly 630 with the pressure sensor assembly 220. According to example aspects, a PCB mounting ring 642 can be supported on the central support 632 and the main PCB 646 can be received on the PCB mounting ring 642, as shown. According to example aspects, the cylindrical wall 638 can surround the main PCB 646 to aid in protecting the main PCB 646 from external factors, such as moisture, dust particles, dirt particles, and the like. Example aspects of the main PCB 646 can be secured to the PCB mounting ring 642 by one or more fasteners (not shown), such as, for example, clips, screws, adhesives, and the like. Furthermore, example aspects of the PCB mounting ring 642 can comprise one or more positioning rods 644 that can aid in properly positioning the main PCB 646 on the PCB mounting ring 642.

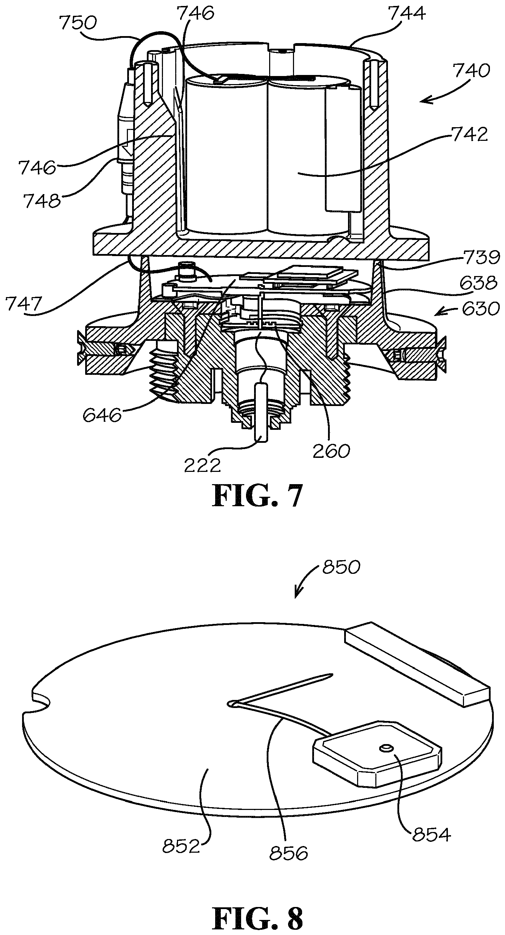

As shown, distal ends of the pins 262 of the auxiliary PCB 260 can engage the main PCB 646. In the present aspect, as shown, the auxiliary PCB 260 can comprise an additional pin 262 substantially aligned with the center axis 236 and connected to the main PCB 646 at a desired location. The pressure sensor 222 can communicate pressure data to the main PCB 646 through the pressure sensor wire 258 and the auxiliary PCB 260. In some aspects, the pressure sensor 222 can continually communicate pressure data to the main PCB 646, while in other aspects, the pressure sensor 222 can communicate pressure data only when an anomaly is detected. The main PCB 646 can then evaluate the pressure data to determine whether a concern is present. In instances wherein the pressure data presents a concern, the main PCB 646 can electrically trigger an antenna 854 (shown in Figure 8) to send an alert signal to a third party (e.g., an external operations center), as will be described in further detail below.

According to example aspects, a potting compound, such as silicone, epoxy resin, polyurethane, or any other suitable potting compound can fill a portion of the base assembly 630 to cover the main PCB 646. Covering the main PCB 646 with a potting compound can protect the main PCB 646 from moisture, corrosion, and vibrations, can aid in heat dissipation, and can provide other benefits. In some aspects, the auxiliary PCB 260, the pins 262, and/or other electronic components of the pressure monitoring subsystem 110 can be protected from external factors by potting.

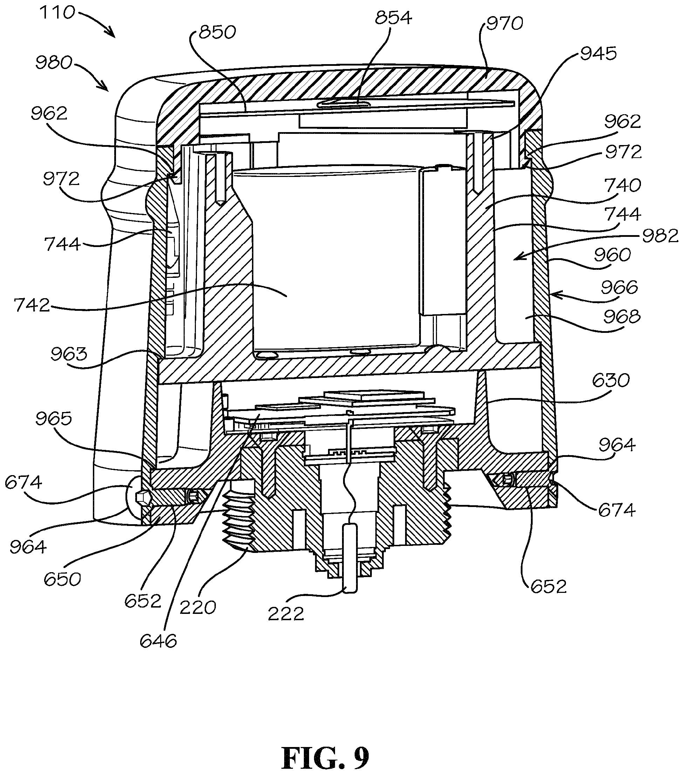

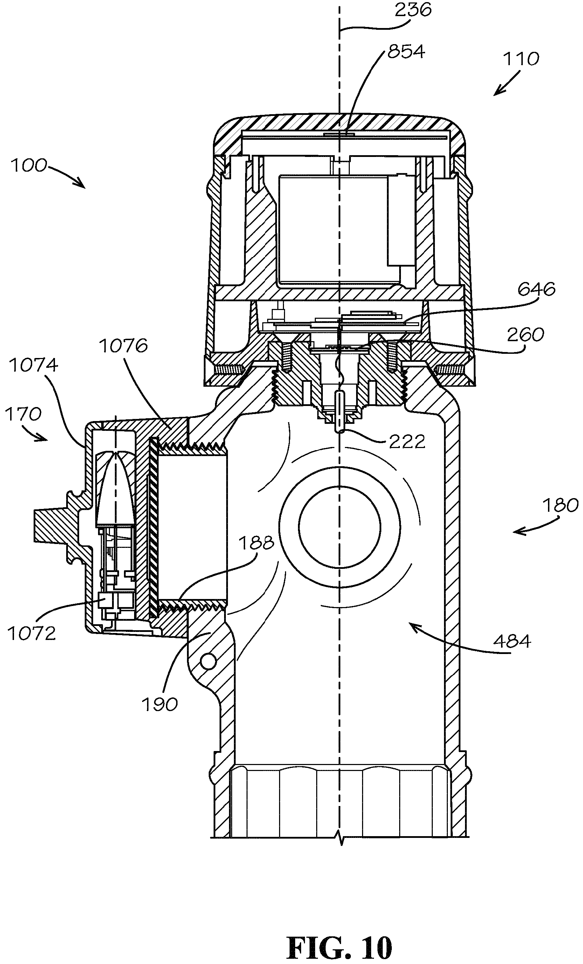

Example aspects of the base assembly 630 can further comprise an annular mounting flange 650 extending radially outward from the central support 632. An annular groove 654 can be formed between the annular mounting flange 650 and threaded flange 242 of the pressure sensor assembly 220. In example aspects, the hydrant flange 492 (shown in Figure 4) of the wet barrel hydrant 180 (shown in Figure 1) can be received within the annular groove 654, as illustrated in Figure 10. Furthermore, in example aspects, the annular mounting flange 650 can comprise on or more radially-extending hydrant mounting bores 652, as shown. One or more fasteners, such as the cone point screws 656 depicted herein, can be received within the hydrant mounting bores 652 and can engage the hydrant flange 492 to further aid in securing the pressure monitoring assembly to the wet barrel hydrant 180. Further, according to example aspects, security screws 674 can be received within the hydrant mounting bores 652 behind the cone point screws 656. The security screws 674 are described in further detail below with reference to Figure 9.

As shown in Figure 7, the pressure monitoring subsystem 110 (shown in Figure 1) can further comprise a power assembly 740 mounted to the base assembly 630. The power assembly 740 can comprise a power source, such as a battery pack 742, as shown, for powering various components of the pressure monitoring subsystem 110. For example, the auxiliary and main PCBs 260,646, the pressure sensor 222, and the antenna 854 (shown in Figure 8) can all be powered by the battery pack 742. Example aspects of the power assembly 740 can further comprise a battery housing 744 within which the battery pack 742 can be received. The battery housing 744 can comprise one or more standoffs 746, as shown, which can aid in properly positioning the battery pack 742 within the battery housing 744. In some aspects, the battery pack 742 can be potted in place. For example, the battery housing 744 can be partially or completely filled with a potting compound, such as, for example, silicone, epoxy resin, polyurethane, or any other suitable potting compound. The potting compound can be configured to protect the battery pack 742 from moisture, corrosion, vibrations, to aid in heat dissipation, and to provide other benefits. According to example aspects, the battery housing 744 can be positioned at and rest upon a distal end 739 of the cylindrical wall 638 of the base assembly 630. Furthermore, a power connector 748 can be provided for electrically connecting the battery pack 742 to the main PCB 646. In one aspect, as shown, a battery wire 750 can connect to the power connector 748 and a PCB wire 747 can connect to the power connector 748 to allow power to be transferred from the battery pack 742 to the main PCB 646. Example aspects of the power connector 748 can be received in an annular gap 982 (shown in Figure 9) defined between the battery housing 744 and an outer housing 980 (shown in Figure 9) of the pressure monitoring subsystem 110.

Figure 8 illustrates an antenna assembly 850 of the pressure monitoring subsystem 110 (shown in Figure 1). As shown, the antenna assembly 850 can comprise an antenna board 852 and the antenna 854 mounted on the antenna board 852. The antenna 854 can be configured to send signals representative of the pressure data measured by the pressure sensor 222 (shown in Figure 2). Example aspects of the antenna 854 can be substantially horizontal-facing when the pressure monitoring subsystem 110 is mounted to the wet barrel hydrant 180 (shown in Figure 1); however, in other aspects, the antenna 854 can be substantially vertical-facing or can face any other desired direction, including one or more antennas 854 facing multiple directions. Furthermore, as shown, the antenna 854 can comprise an antenna wire 856 for electrically connecting the antenna 854 to the main PCB 646 (shown in Figure 6). According to example aspects, the battery pack 742 (shown in Figure 7), pressure sensor 222, auxiliary PCB 260 (shown in Figure 2), main PCB 646, and the antenna 854 can all be in electrical communication with each other. In some aspects, portions of the antenna assembly 850 can be protected from various external factors by a potting compound, such as the potting compounds described above.

Figure 9 illustrates an assembled view of the pressure monitoring subsystem 110. As shown, the pressure monitoring subsystem 110 further comprises a sidewall shell 960 and a cap 970 for enclosing various components of the pressure monitoring subsystem 110, including, for example, the antenna assembly 850, the power assembly 740, the base assembly 630, and portions of the pressure sensor assembly 220. The cap 970 and the sidewall shell 960 define together the outer housing 980 that can enclose at least the main PCB 646 and the antenna 854. In example aspects, the antenna assembly 850 can be mounted to the cap 970 proximate to a distal end 945 of the battery housing 744, as shown. Example aspects of the cap 970 can be formed from a non-ferrous material, so that the material of the cap 970 does not interfere with the ability of the antenna 854 to send signals to the third party. For example, the cap 970 can be formed from a plastic material, or any other suitable non-ferrous material having a sufficient rigidity for protecting the antenna 854 and other interior components of the pressure monitoring subsystem 110. Furthermore, in example aspects, the cap 970 can define a fastener, such as, for example, one or more clips 972, for engaging a mating fastener of the sidewall shell 960, such as, for example, an interior annular ridge 962, to secure the cap 970 to the sidewall shell 960. In other aspects, any other suitable fastener know in the art can be used, including, but not limited to, clips, snaps, adhesives, and the like.

Example aspects of the sidewall shell 960 can also be formed from a material having a sufficient rigidity for protecting interior components of the pressure monitoring subsystem 110. In some aspects, the sidewall shell 960 can be formed from a ferrous material, such as, for example, stainless steel or iron. In other aspects, the sidewall shell 960 can be formed from a non-ferrous material, such as, for example, aluminum or plastic, such as if it is desired to align the antenna 854 to transmit signal through the sidewall shell 960. Example aspects of the sidewall shell can define a first shoulder 963 configured to engage the battery housing 744 to hold the battery housing 744 against the base assembly 630, as shown. Furthermore, as shown, the sidewall shell 960 can comprise shell mounting bores 964 formed proximate the mounting flange 650 of the base assembly 630, and which can extend from an outer surface 966 of the sidewall shell 960 to an inner surface 968 of the sidewall shell 960. The shell mounting bores 964 of the sidewall shell 960 can be configured to align with the hydrant mounting bores 652 of the mounting flange 650, and a fastener, such as the security screws 674 illustrated herein, can be configured to extending through each corresponding pair of shell and hydrant mounting bores 964,652 to secure the sidewall shell 960 to the base assembly 630. According to example aspects, the sidewall shell can define a second shoulder 965 configured to engage the mounting flange 650 of the base assembly 630, which can aid in aligning the shell mounting bores 964 with the hydrant mounting bores 652. In some aspects, the security screws 674 can contact the cone point screws 656 to move the screws 656 inwards in the hydrant mounting bores 652. In example aspects, the sidewall shell 960 can be selectively removed for replacing the battery pack 742 and/or for repairing or replacing other interior components of the pressure monitoring subsystem 110.

Figure 10 illustrates a cross-sectional view of the pressure monitoring and leak detection system 100 mounted to the wet barrel hydrant 180, take along line 2-2 in Figure 1. As shown, the leak detection subsystem 170 can be attached to the nozzle 188 on the left side 190 of the wet barrel hydrant 180, relative to the orientation shown. Example aspects of the leak detection subsystem 170 can be substantially similar to the hydrant cap leak detector disclosed in U.S. Application No. 16/121,136, filed September 4, 2018. Other known hydrant cap leak detectors can be utilized in other aspects. As shown, the leak detection subsystem 170 can comprise a vibration sensor 1072. Example aspects of the vibration sensor 1072 can be housed in a leak detection housing 1074. As shown, the leak detection housing 1074 can be formed as a nozzle cap for the nozzle 188. In example aspects, the leak detection housing 1074 can comprise a threaded connector 1076 for mounting the leak detection housing to the nozzle 188. The vibration sensor 1072 can be configured to detect leaks within pipeline system by monitoring vibrations in the pipeline system. For example, the vibration sensor 1072 can monitor vibrations in the metal of pipes comprised by the pipeline system. The vibration readings from the vibration sensor 1072 can be processed by a leak detection PCB (not shown) to determine whether a leak is present, and a leak detection antenna (not shown) can transmit a signal representative of the leak detection data to an external source. In example aspects, the leak detection subsystem 170 can be configured in an operating mode, wherein the leak detection subsystem 170 can be monitoring vibrations (i.e., running a leak detection cycle), and a rest mode, wherein the leak detection subsystem 170 is not monitoring vibrations.

A method for using the pressure monitoring subsystem 110 can comprise measuring the water pressure of water received in the hydrant cavity 484 of the wet barrel hydrant 180, processing the water pressure data to determine whether an anomaly is present, and sending an alert signal when an anomaly is determined to be present. In some aspects, sending an alert signal can comprise sending an alert signal to the leak detection subsystem 170. In other aspects, sending an alert signal can comprise sending an alert signal to a remote operations center, or another third party. Furthermore, according to example aspects, processing the water pressure data can comprise sending the water pressure data measured by the pressure sensor 222 to a PCB (such as the auxiliary PCB 260 and/or main PCB 646), processing the water pressure data with the PCB, and communicating the water pressure data to the antenna 854.

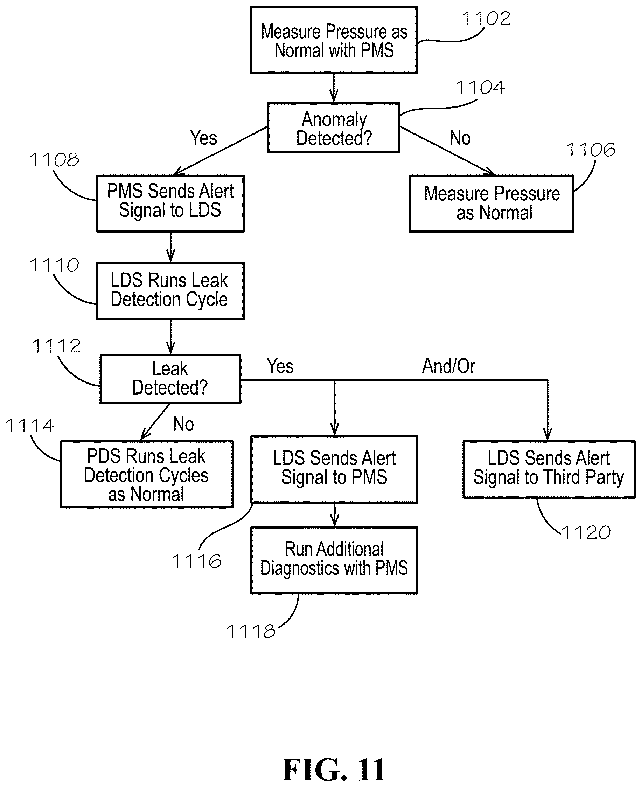

According to example aspects, the pressure monitoring subsystem 110 ("PMS") can transmit signals to the leak detection subsystem 170 ("LDS") and/or the leak detection subsystem 170 can transmit signals to the pressure monitoring subsystem 110. For example, as illustrated in Figure 11, in one aspect, a method for using the pressure monitoring and leak detection system 100 (shown in Figure 1) can comprise a first step 1102 of measuring the water pressure of water received in the hydrant cavity 484 (shown in Figure 4) of a wet barrel hydrant 180 (shown in Figure 1) with the pressure monitoring subsystem 110 (shown in Figure 1), and a second step 1104 can comprise processing the water pressure data to determine whether an anomaly is present. If an anomaly is not detected, a third step 1106 can comprise continuing to measure the water pressure as normal. However, if an anomaly is detected, an alternate third step 1108 can comprise alerting the leak detection subsystem 170 (shown in Figure 1), either directly from the pressure monitoring subsystem 110 or indirectly through a third party, such as a remote operations center operated by a utility company. A fourth step 1110 can comprise running a leak detection cycle with the leak detection subsystem 170 and a fifth step 1112 can comprise processing the leak detection data with the leak detection subsystem 170 or at the remote operations center to determine whether a leak is present. If a leak is not detected, a sixth step 1114 can comprise continuing to run leak detection cycles as regularly scheduled. In another aspect, wherein a pressure anomaly is detected but a possible leak is not detected, an alert signal indicative of these results can be sent to the third party. If a possible leak is detected, an alternate sixth step 1116 can comprise sending an alert signal to the pressure monitoring subsystem 110, and a seventh step 1118 can comprise running additional diagnostics with the pressure monitoring subsystem 110 to further evaluate the possible leak. In some aspects, an eighth step 1120 can comprise also sending an alert signal to a third party, such as the remote operations center, when a possible leak is detected. The eighth step 1120 can be performed in tandem with or after the sixth step 1116, or in some aspects, can be performed instead of the sixth step 1116 and seventh step 1118.

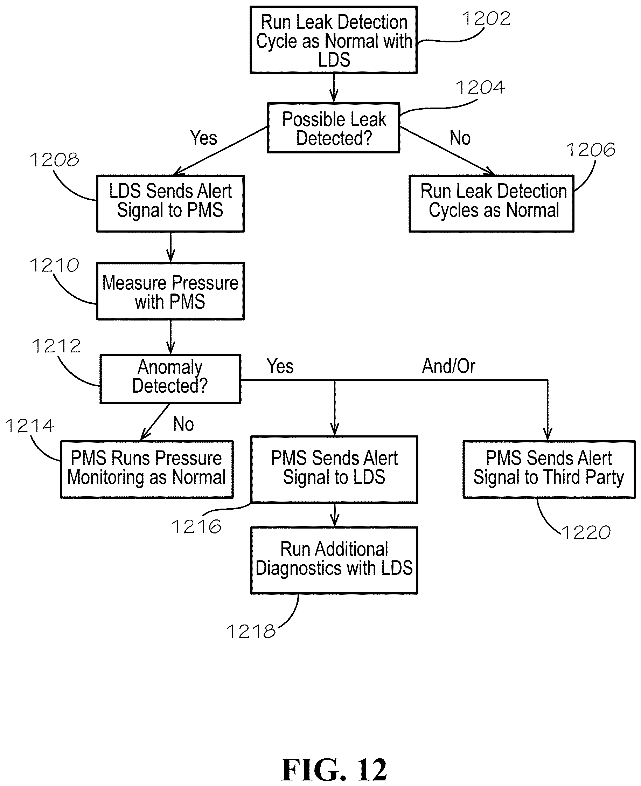

In another aspect, the series of steps described above can be substantially reversed. For example, as shown in Figure 12, a method for using the pressure monitoring and leak detection system 100 can comprise a first step 1202 of running a leak detection cycle as regularly scheduled with the leak detection subsystem 170 (shown in Figure 1), and a second step 1204 can comprise processing the leak detection data to determine whether a leak is present. If a leak is not detected, a third step 1206 can comprise continuing to run leak detection cycles as regularly scheduled. However, if a possible leak is detected, an alternate third step 1208 can comprise alerting the pressure monitoring subsystem 110 (shown in Figure 1) either directly from the leak detection subsystem 170 or indirectly through the third party (e.g., a remote operations center operated by a utility company). A fourth step 1210 can comprise measuring the water pressure of the water within the hydrant cavity 484 (shown in Figure 4) with the pressure monitoring subsystem 110, and a fifth step 1212 can comprise processing the water pressure data with the pressure monitoring subsystem 110 or at the remote operations center to determine whether an anomaly is present. If an anomaly is not detected, a sixth step 1214 can comprise continuing to measure the water pressure as normal. In another aspect, if a possible leak is detected but a pressure anomaly is not detected, an alert signal indicative of these results can be sent to the third party. If a pressure anomaly is detected, an alternate sixth step 1216 can comprise sending an alert signal to the leak detection subsystem 170, and a seventh step 1218 can comprise running an additional leak detection cycle to further evaluate the possible leak. In some aspects, an eighth step 1220 can comprise also sending an alert signal to a third party, such as a remote operations center, when an anomaly is detected. The eighth step 1220 can be performed in tandem with or after the sixth step 1216, or in some aspects, can be performed instead of the sixth step 1216 and seventh step 1218.

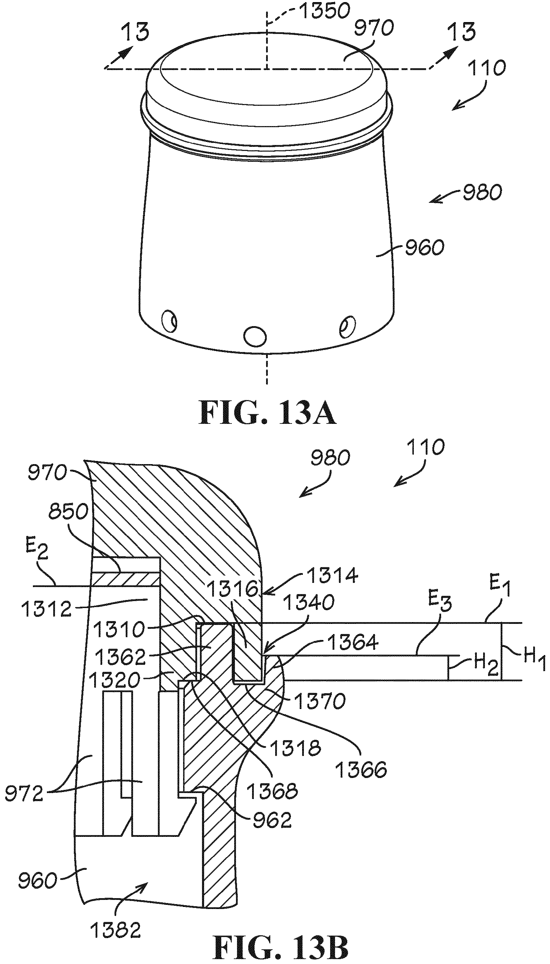

Figure 13A illustrates the pressure monitoring subsystem 110. The pressure monitoring subsystem 110 can be a standalone pressure monitoring system not tied to the leak detection subsystem 170 (shown in Figure 1) or any other subsystem. As shown, the pressure monitoring subsystem 110 can comprise the sidewall shell 960 and the cap 970. The cap 970 and the sidewall shell 960 can together define the outer housing 980 that can enclose various components of the pressure monitoring subsystem 110. For example, in one aspect, the outer housing 980 can enclose at least the main PCB 646 (shown in Figure 6) and the antenna 854 (shown in Figure 8). The sidewall shell 960 defines a sidewall axis 1350 extending centrally therethrough. In example aspects, the sidewall axis 1350 can be substantially co-linear with the center axis 236 (shown in Figure 2). Referring to Figure 13B, as described above, the cap 970 can comprise one or more fasteners, such as, for example, the clips 972 for connecting the cap 970 to the sidewall shell 960. As shown, the clips 972 can extend generally vertically downward, relative to the orientation shown, from a bottom end 1320 of cap 970. The clips 972 can be configured to engage a mating fastener of the sidewall shell 960, such as, for example, the interior annular ridge 962, to secure the cap 970 to the sidewall shell 960. In other aspects, any other suitable fastener know in the art can be used, including, but not limited to snaps, adhesives, and the like.

In some aspects, a small gap 1340 can be formed, either intentionally or unintentionally due to, for example, manufacturing tolerances, between the sidewall shell 960 and the cap 970. To prevent the intrusion of water and other undesirable elements through the gap 1340 and into an interior 1382 of the outer housing 980, the sidewall shell 960 defines an annular inner sidewall projection 1362 and annular outer sidewall projection 1364. In the present aspect, each of the inner sidewall projection 1362 and outer sidewall projection 1364 can define a generally rectangular cross-sectional shape. Each of the inner and outer sidewall projections 1362,1364 extend generally vertically upward, relative to the orientation shown, from a top end 1370 of the sidewall shell 960. The inner sidewall projection 1362 is elongated as compared to the outer sidewall projection 1364. That is, the inner sidewall projection 1362 defines a height H₁ that is greater than a height H₂ of the outer sidewall projection 1364. An annular sidewall recess 1366 can be defined between the inner sidewall projection 1362 and outer sidewall projection 1364, as shown. Furthermore, an annular sidewall mounting ledge 1368 can be defined adjacent the inner sidewall projection 1362 and can extend generally radially inward relative to the sidewall axis 1350.

The cap 970 comprises an annular cap recess 1310 formed between an inner cap surface 1312 of the cap 970 and an outer cap surface 1314 of the cap 970, as shown. An annular outer cap projection 1316 can be defined between the annular cap recess 1310 and the outer cap surface 1314 of the cap 970, and an annular cap mounting shoulder 1318 can be defined between the annular cap recess 1310 and the clips 972. As shown in Figure 13B, with the cap 970 mounted on the sidewall shell 960, the cap mounting shoulder 1318 can engage the sidewall mounting ledge 1368. The inner sidewall projection 1362 engages the annular cap recess 1310, and the outer cap projection 1316 can engage the annular sidewall recess 1366. The outer sidewall projection 1364 extends upward, relative to the orientation shown, alongside the outer cap surface 1314 of the cap 970. As shown, any water (or other undesirable element) that may breach the gap 1340 between the sidewall shell 960 and the cap 970 would have to travel under the outer cap projection 1316 and then travel upwards and over the elongated inner sidewall projection 1362 in order to enter the interior 1382 of the outer housing 980. Additionally, because height H₁ is greater than height H₂, water cannot travel upwards above inner sidewall projection 1362 because it will overflow over outer sidewall projection 1364 before the water level rises high enough to reach height H₂. The configuration of the outer housing 980 can also limit accidental or objectionable disassembly of the outer housing 980, as it would be difficult to wedge a tool (not shown) down through the gap 1340 and underneath the outer cap projection 1316 to separate the cap 970 from the sidewall shell 960. Furthermore, loads applied at or near the joint between the cap 970 and sidewall shell 960 can be spread out across the overlapping projections (e.g., the inner sidewall projection 1362, the outer cap projection 1316, and the outer sidewall projection 1364), which can reduce damage that can be caused by stresses at the joint.

As described above, example aspects of the cap 970 can be formed from a non-ferrous material, so that the material of the cap 970 does not interfere with the ability of the antenna 854 (shown in Figure 8) to send signals to the third party. In some aspects, the sidewall shell 960 can be formed from a non-ferrous material as well, such as aluminum or plastic. However, in other aspects, the sidewall shell 960 can be formed from a ferrous material, such as a ferrous metal material like stainless steel or iron. In such aspects, the outer housing 980 can be configured such that the sidewall shell 960 can extend vertically to an elevation E₁, relative to orientation shown, that can be less than an elevation E₂ of the antenna assembly 850, such that the ferrous material of the sidewall shell 960 does not interfere with the signaling ability of the antenna 854. As shown, the inner sidewall projection 1362 can extend to the elevation E₁, and the outer sidewall projection 1364 can extend to an elevation E₃ lower than the elevation E₁.

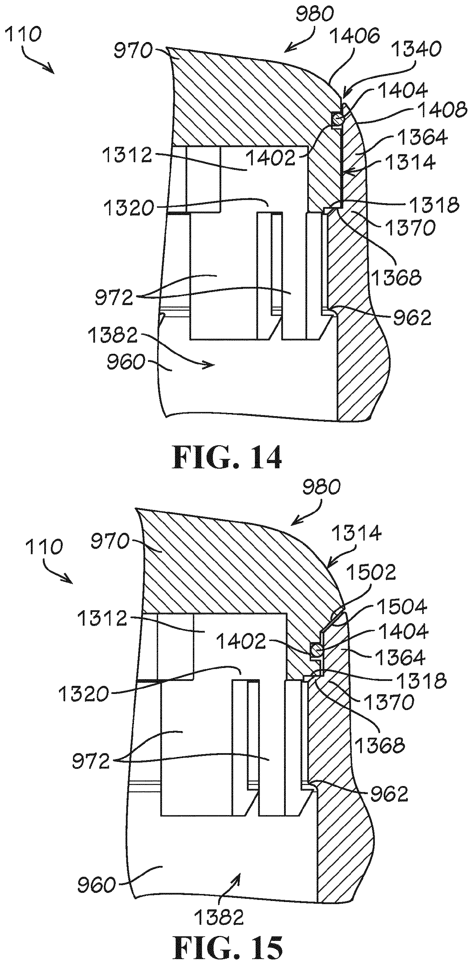

Figure 14 illustrates an aspect of the outer housing 980 of the pressure monitoring subsystem 110, not falling within the scope of the claims. The sidewall shell 960 can define the outer sidewall projection 1364 configured to extend alongside the generally annular outer cap surface 1314 of the cap 970. According to example aspects, the outer cap surface 1314 can define an annular notch 1402 formed therein, as shown. A packing, such as, for example, an O-ring 1404, can be received in the annular notch 1402 and can be configured to create a watertight seal between the outer sidewall projection 1364 and the outer cap surface 1314. As such, in instances wherein water (or another undesirable element) may breach the gap 1340 formed between the cap 970 and the sidewall shell 960, the O-ring 1404 can prevent the water from entering the interior 1382 of the outer housing 980. In some aspects, the outer cap surface 1314 can define a curved portion 1406 proximate the gap 1340, and the outer sidewall projection 1364 can define a curved portion 1408 proximate the gap 1340, such that the cap 970 is substantially flush with the sidewall shell 960 at the gap 1340. Furthermore, in the present aspect, the sidewall mounting ledge 1368 can extend radially inward from the outer sidewall projection 1364, and the cap mounting shoulder 1318 can extend radially inward from the outer cap surface 1314 between the outer cap surface 1314 and the clips 972. The cap mounting shoulder 1318 can engage the sidewall mounting ledge 1368, as shown, when the cap 970 is mounted to the sidewall shell 960.

Figure 15 illustrates an aspect of the outer housing 980, not falling within the scope of the claims. The aspect of the outer housing 980 can be similar to the aspect of Figure 14. However, as shown, the outer cap surface 1314 can define a sloped portion 1502 configured to rest on a sloped top end 1504 of the outer sidewall projection 1364 to further prevent intrusion of water.

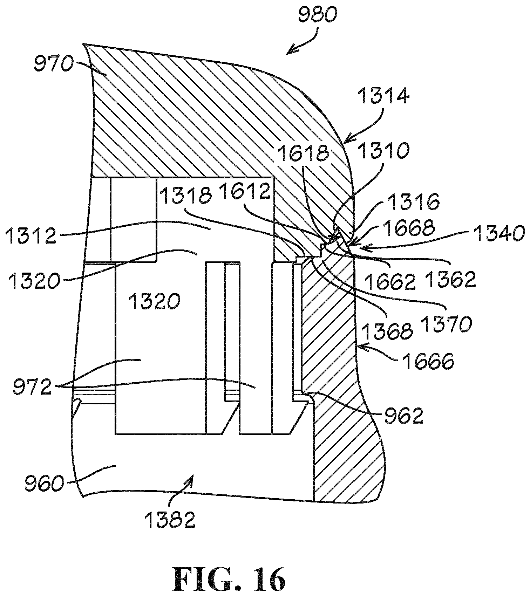

Figure 16 illustrates an aspect of the outer housing 980, not falling within the scope of the claims. Similar to the aspect illustrated in Figure 13B, the outer housing 980 of the present aspect can define the inner sidewall projection 1362 that can engage the cap recess 1310. The inner sidewall projection 1362 can define a generally triangular cross-sectional shape, as shown. As shown, the outer sidewall projection 1364 (shown in Figure 13B) may not be present. The inner sidewall projection 1362 can define a slanted sidewall projection surface 1668 and the cap recess 1310 can define a confronting slanted cap recess surface 1618. In an instance where water (or another undesirable element) may breach the gap 1340 between the cap 970 and the sidewall shell 960, the water would have to travel up the slanted sidewall projection surface 1668 and over the inner sidewall projection 1362 in order to potentially enter the interior 1382 of the outer housing 980.

According to the present aspect, the cap 970 can also define the outer cap projection 1316 formed between the outer cap surface 1314 and the cap recess 1310. As shown, the outer cap surface 1314 can be substantially flush with an outer sidewall surface 1666 of the sidewall shell 960. The outer housing 980 can also define the cap mounting shoulder 1318 that can engage the sidewall mounting ledge 1368. Example aspects of the cap 970 can further define a second cap mounting shoulder 1612 extending radially between the cap mounting shoulder 1318 and the cap recess 1310. The sidewall shell 960 can further define a second sidewall mounting ledge 1662 extending radially between the sidewall mounting ledge 1368 and the inner sidewall projection 1362. The second cap mounting shoulder 1612 can engage the second sidewall mounting ledge 1662, as shown.

## Claims

1. An outer housing for a pressure monitoring system comprising:
a sidewall shell (960) defining an axis extending centrally therethrough, the sidewall shell comprising an annular inner sidewall projection (1362) extending from a top end thereof; and
a cap (970) mounted to the sidewall shell (960), the cap (970) defining an annular cap recess (1310), wherein the annular inner sidewall projection (1362) is configured to engage the annular cap recess (1310); the outer housing (980) being **characterised in that** it further comprises
an annular outer sidewall projection (1364), the annular outer sidewall projection (1364) positioned radially outward from the annular inner sidewall projection (1362), wherein the annular inner sidewall projection (1362) defines a height that is greater than a height of the annular outer sidewall projection (1364).

2. The outer housing of claim 1, wherein;
the sidewall shell (960) defines the top end;
the annular inner sidewall projection (1362) extends away from the sidewall shell (960) at the top end thereof;
the cap (970) defines a bottom end; and
the annular cap recess extends into the cap (970) from the bottom end thereof.

3. The outer housing of claim 1, wherein:
an inner surface of the annular outer sidewall projection abuts an outer surface of the cap (970);
the cap defines an annular outer cap projection between the annular cap recess and the outer surface;
the sidewall shell (960) defines an annular sidewall recess between the annular inner sidewall projection (1362) and the annular outer sidewall projection; and
the annular outer cap projection is received in the annular sidewall recess.

4. The outer housing of claim 1, wherein:
the sidewall shell (960) defines a first annular sidewall mounting ledge extending radially inward from the annular inner sidewall projection (1362);
the cap (970) defines a first annular cap mounting shoulder extending radially inward from the annular cap recess; and
the first annular cap mounting shoulder is configured to engage the first annular sidewall mounting ledge.

5. The outer housing of claim 4, wherein;
the sidewall shell (960) defines a second annular sidewall mounting ledge extending radially between the first annular sidewall mounting ledge and the annular inner sidewall projection (1362);
the cap defines a second annular cap mounting shoulder extending radially between the first annular cap mounting shoulder and the annular cap recess; and
the second annular cap mounting shoulder is configured to engage the second annular sidewall mounting ledge.

6. The outer housing of claim 1, wherein the annular inner sidewall projection (1362) defines a slanted sidewall projection surface and the annular cap recess defines a slanted cap recess surface configured to confront the slanted sidewall projection surface.

7. The outer housing of claim 1, wherein the cap (970) comprises a clip and the sidewall shell (960) comprises a ridge, and wherein the clip engages the ridge to couple the cap (970) to the sidewall shell (960).

8. A pressure monitoring system for a wet barrel hydrant comprising:
a pressure sensor assembly (220) comprising a pressure sensor (222) and a connector (240), the pressure sensor configured to measure the pressure of a fluid received in the wet barrel hydrant, the connector configured to attach the pressure monitoring system to the wet barrel hydrant;
a base assembly (630) comprising a mounting flange (650), the pressure sensor assembly coupled to the base assembly; and
an outer housing according to any of claims 1 to 7, the outer housing coupled to the mounting flange.

9. The pressure monitoring system of claim 8, further comprising an antenna configured to send a signal representative of pressure data measured by the pressure sensor, wherein the antenna is mounted to the cap (970).

10. The pressure monitoring system of claim 9, further comprising a main PCB connected to the pressure sensor (222)
and configured to process the pressure data measured by the pressure sensor.

11. The pressure monitoring system of claim 9, wherein;
the sidewall shell (960) extends vertically to a first elevation that is less than an elevation of the antenna, considering the elevation of the antenna as second elevation;
the annular inner sidewall projection (1362) extends to the first elevation; the sidewall shell (960) further comprises the annular outer sidewall projection; and
the annular outer sidewall projection extends to a third elevation between the first elevation and the second elevation.

## Patentansprüche

1. Außengehäuse für ein Drucküberwachungssystem, aufweisend:
eine Seitenwandschale (960), die eine Achse definiert, die sich zentral durch sie hindurch erstreckt, wobei die Seitenwandschale einen ringförmigen inneren Seitenwandvorsprung (1362) aufweist, der sich von einem oberen Ende davon erstreckt; und
eine Kappe (970), die an der Seitenwandschale (960) montiert ist, wobei die Kappe (970) eine ringförmige Kappenaussparung (1310) definiert, wobei der ringförmige innere Seitenwandvorsprung (1362) konfiguriert ist, um in die ringförmige Kappenaussparung (1310) einzugreifen;
wobei das Außengehäuse (980) **dadurch gekennzeichnet ist, dass** es ferner einen ringförmigen äußeren Seitenwandvorsprung (1364) aufweist, wobei der ringförmige äußere Seitenwandvorsprung (1364) radial außerhalb des ringförmigen inneren Seitenwandvorsprung (1362) positioniert ist, wobei der ringförmige innere Seitenwandvorsprung (1362) eine Höhe definiert, die größer als eine Höhe des ringförmigen äußeren Seitenwandvorsprungs (1364) ist.

2. Außengehäuse nach Anspruch 1, wobei:
die Seitenwandschale (960) das obere Ende definiert;
der ringförmige innere Seitenwandvorsprung (1362) sich von der Seitenwandschale (960) an deren oberem Ende weg erstreckt;
die Kappe (970) ein unteres Ende definiert; und
die ringförmige Kappenaussparung sich in die Kappe (970) von deren unterem Ende erstreckt.

3. Außengehäuse nach Anspruch 1, wobei:
eine Innenfläche des ringförmigen äußeren Seitenwandvorsprungs an eine Außenfläche der Kappe (970) anstößt;
die Kappe einen ringförmigen äußeren Kappenvorsprung zwischen der ringförmigen Kappenaussparung und der Außenfläche definiert;
die Seitenwandschale (960) eine ringförmige Seitenwandaussparung zwischen dem ringförmigen inneren Seitenwandvorsprung (1362) und dem ringförmigen äußeren Seitenwandvorsprung definiert; und
der ringförmige äußere Kappenvorsprung in der ringförmigen Seitenwandaussparung aufgenommen ist.

4. Außengehäuse nach Anspruch 1, wobei:
die Seitenwandschale (960) eine erste ringförmige Seitenwandmontageleiste definiert, die sich vom ringförmigen inneren Seitenwandvorsprung (1362) radial nach innen erstreckt;
die Kappe (970) eine erste ringförmige Kappenmontageschulter definiert, die sich von der ringförmigen Kappenaussparung radial nach innen erstreckt; und
die erste ringförmige Kappenmontageschulter konfiguriert ist, um mit der ersten ringförmigen Seitenwandmontageleiste in Eingriff zu kommen.

5. Außengehäuse nach Anspruch 4, wobei;
die Seitenwandschale (960) eine zweite ringförmige Seitenwandmontageleiste definiert, die sich radial zwischen der ersten ringförmigen Seitenwandmontageleiste und der ringförmigen inneren Seitenwandvorsprung (1362) erstreckt;
die Kappe eine zweite ringförmige Kappenmontageschulter definiert, die sich radial zwischen der ersten ringförmigen Kappenmontageschulter und der ringförmigen Kappenaussparung erstreckt; und
die zweite ringförmige Kappenmontageschulter konfiguriert ist, um mit der zweiten ringförmigen Seitenwandmontageleiste in Eingriff zu kommen.

6. Außengehäuse nach Anspruch 1, wobei der ringförmige innere Seitenwandvorsprung (1362) eine geneigte Seitenwandvorsprungsfläche definiert und die ringförmige Kappenaussparung eine geneigte Kappenaussparungsfläche definiert, die so ausgestaltet ist, dass sie der geneigten Seitenwandvorsprungsfläche gegenüberliegt.

7. Außengehäuse nach Anspruch 1, wobei die Kappe (970) eine Klammer aufweist und die Seitenwandschale (960) eine Rippe aufweist, und wobei die Klammer mit der Rippe in Eingriff steht, um die Kappe (970) mit der Seitenwandschale (960) zu koppeln.

8. Drucküberwachungssystem für einen Nassfass-Hydranten, aufweisend:
eine Drucksensoranordnung (220), die einen Drucksensor (222) und einen Verbinder (240) aufweist, wobei der Drucksensor konfiguriert ist, um den Druck eines im Nassfass-Hydranten aufgenommenen Fluids zu messen, wobei der Verbinder konfiguriert ist, um das Drucküberwachungssystem am Nassfass-Hydranten anzubringen;
eine Basisanordnung (630), die einen Montageflansch (650) aufweist, wobei die Drucksensoranordnung mit der Basisbaugruppe gekoppelt ist; und
ein Außengehäuse nach einem der Ansprüche 1 bis 7, wobei das Außengehäuse mit dem Montageflansch gekoppelt ist.

9. Drucküberwachungssystem nach Anspruch 8, ferner aufweisend eine Antenne, die konfiguriert ist, um ein Signal zu senden, das für die vom Drucksensor gemessenen Druckdaten repräsentativ ist, wobei die Antenne an der Kappe (970) montiert ist.

10. Drucküberwachungssystem nach Anspruch 9, ferner aufweisend eine Haupt-PCB, die mit dem Drucksensor (222) verbunden ist und konfiguriert ist, um die durch den Drucksensor gemessenen Druckdaten zu verarbeiten.

11. Drucküberwachungssystem nach Anspruch 9, wobei;
die Seitenwandschale (960) sich vertikal zu einer ersten Höhe erstreckt, die geringer als eine Höhe der Antenne ist, wobei die Höhe der Antenne als zweite Höhe betrachtet wird;
der ringförmige innere Seitenwandvorsprung (1362) sich zur ersten Höhe erstreckt; die Seitenwandschale (960) ferner den ringförmigen äußeren Seitenwandvorsprung aufweist; und
der ringförmige äußere Seitenwandvorsprung sich zu einer dritten Höhe zwischen der ersten Höhe und der zweiten Höhe erstreckt.

## Revendications

1. Logement extérieur pour un système de surveillance de pression comprenant :
une coque à paroi latérale (960) définissant un axe s'étendant centralement à travers celle-ci, la coque à paroi latérale comprenant une saillie interne et annulaire à paroi latérale (1362) qui s'étend depuis une extrémité supérieure de celle-ci ; et
un capuchon (970) monté sur la coque à paroi latérale (960), le capuchon (970) définissant un évidement annulaire de capuchon (1310), la saillie interne et annulaire à paroi latérale (1362) étant configurée pour s'engager dans l'évidement annulaire de capuchon (1310),
le logement extérieur (980) étant **caractérisé en ce qu'**il comprend en outre :
une saillie externe et annulaire à paroi latérale (1364), la saillie externe et annulaire à paroi latérale (1364) étant positionnée radialement vers l'extérieur à partir de la saillie interne et annulaire à paroi latérale (1362),
dans lequel la saillie interne et annulaire à paroi latérale (1362) définit une hauteur qui est supérieure à la hauteur de la saillie externe et annulaire à paroi latérale (1364).

2. Logement extérieur selon la revendication 1, dans lequel :
la coque à paroi latérale (960) définit l'extrémité supérieure ;
la saillie interne et annulaire à paroi latérale (1362) s'étend en s'éloignant de la coque à paroi latérale (960) au niveau de l'extrémité supérieure de celle-ci ;
le capuchon (970) définit une extrémité inférieure ; et
l'évidement annulaire de capuchon s'étend dans le capuchon (970) à partir de l'extrémité inférieure de celui-ci.

3. Logement extérieur selon la revendication 1, dans lequel :
une surface interne de la saillie externe et annulaire à paroi latérale vient en butée contre une surface externe du capuchon (970) ;
le capuchon définit une saillie externe et annulaire de capuchon entre l'évidement annulaire de capuchon et la surface externe ;
la coque à paroi latérale (960) définit un évidement annulaire à paroi latérale entre la saillie interne et annulaire à paroi latérale (1362) et la saillie externe et annulaire à paroi latérale ; et
la saillie externe et annulaire de capuchon est reçue dans l'évidement annulaire à paroi latérale.

4. Logement extérieur selon la revendication 1, dans lequel :
la coque à paroi latérale (960) définit une première bordure annulaire de montage à paroi latérale qui s'étend radialement vers l'intérieur à partir de la saillie interne et annulaire à paroi latérale (1362) ;
le capuchon (970) définit un premier épaulement annulaire de montage de capuchon qui s'étend radialement vers l'intérieur à partir de l'évidement annulaire de capuchon ; et
le premier épaulement annulaire de montage de capuchon est configuré pour s'engager dans la première bordure annulaire de montage à paroi latérale.

5. Logement extérieur selon la revendication 4, dans lequel ;
la coque à paroi latérale (960) définit une deuxième bordure annulaire de montage à paroi latérale qui s'étend radialement entre la première bordure annulaire de montage à paroi latérale et la saillie interne et annulaire à paroi latérale (1362) ;
le capuchon définit un deuxième épaulement annulaire de montage de capuchon qui s'étend radialement entre le premier épaulement annulaire de montage de capuchon et l'évidement annulaire de capuchon ; et
le deuxième épaulement annulaire de montage de capuchon est configuré pour s'engager dans la deuxième bordure annulaire de montage à paroi latérale.

6. Logement extérieur selon la revendication 1, dans lequel la saillie interne et annulaire à paroi latérale (1362) définit une surface inclinée de saillie à paroi latérale et l'évidement annulaire de capuchon définit une surface inclinée d'évidement de capuchon qui est configurée pour faire face à la surface inclinée de saillie à paroi latérale.

7. Logement extérieur selon la revendication 1, dans lequel le capuchon (970) comprend une agrafe et la coque à paroi latérale (960) comprend une arête, et dans lequel l'agrafe engage l'arête pour coupler le capuchon (970) à la coque à paroi latérale (960).

8. Système de surveillance de pression destiné à une borne d'incendie sous eau, comprenant
un ensemble capteur de pression (220) comprenant un capteur de pression (222) et un élément de raccord (240), le capteur de pression étant configuré pour mesurer la pression d'un fluide reçu dans la borne d'incendie sous eau, l'élément de raccord étant configuré pour fixer le système de surveillance de pression à la borne d'incendie sous eau ;
un ensemble base (630) comprenant un rebord de montage (650), l'ensemble capteur de pression étant couplé à l'ensemble base ; et
un logement extérieur selon l'une quelconque des revendications 1 à 7, le logement extérieur étant couplé au rebord de montage.

9. Système de surveillance de pression selon la revendication 8, comprenant en outre une antenne configurée pour envoyer un signal représentatif des données de pression mesurées par le capteur de pression, dans lequel l'antenne est montée sur le capuchon (970).

10. Système de surveillance de pression selon la revendication 9, comprenant en outre un circuit imprimé (PCB) principal relié au capteur de pression (222) et configuré pour traiter les données de pression mesurées par le capteur de pression.

11. Système de surveillance de pression selon la revendication 9, dans lequel ;
la coque à paroi latérale (960) s'étend verticalement jusqu'à une première élévation qui est inférieure à une élévation de l'antenne, l'élévation de l'antenne étant considérée comme une deuxième élévation ;
la saillie interne et annulaire à paroi latérale (1362) s'étend jusqu'à la première élévation
la coque à paroi latérale (960) comprend en outre la saillie externe et annulaire à paroi latérale ; et
la saillie externe et annulaire à paroi latérale s'étend jusqu'à une troisième élévation entre la première élévation et la deuxième élévation.
